# EUROPÄISCHE PATENTSCHRIFT

(11) **EP 2 776 733 B1**
(45) Veröffentlichungstag und Bekanntmachung des Hinweises auf die Patenterteilung: **10.02.2016**
(21) Anmeldenummer: 12786938.6
(22) Anmeldetag: 07.11.2012
(51) Int. Cl.: F16D 63/00

(54) **DRUCKMITTELBETÄTIGTE BREMSE**
PRESSURE-MEDIUM-ACTUATED BRAKE
FREIN ACTIONNÉ PAR UN FLUIDE SOUS PRESSION

(30) Priorität: 11.11.2011 DE 202011107776 U
(43) Veröffentlichungstag der Anmeldung: 17.09.2014
(73) Patentinhaber: Chr. Mayr GmbH + Co. KG, 87665 Mauerstetten (DE)
(72) Erfinder: MÜLLER, Alexander, 87600 Kaufbeuren (DE); KAULFUß, Bernd, 87668 Rieden (DE); SCHNEIDER, Sebastian, 87651 Bidingen (DE)
(74) Vertreter: Ruschke, Hans Edvard
(86) Internationale Anmeldenummer: PCT/EP2012/072031
(87) Internationale Veröffentlichungsnummer: WO 2013/068401

(56) Entgegenhaltungen:
- DE-A1- 10 260 274
- DE-A1-102009 008 815
- DE-C1- 10 207 605

## Beschreibung

Bei der vorliegenden Erfindung handelt es sich um eine druckmittelbetätigte Bremse nach dem Oberbegriff des Hauptanspruches. Nach dem Stand der Technik sind Bremsen bekannt, die durch reibschlüssigen Kontakt mit einer Führungsstange in der Lage sind, linear bewegte und/oder rotierende Massen aus definierter Geschwindigkeit und/oder Drehzahl abzubremsen und zu halten.

Eine derartige Bremse wird beispielsweise in DE 102 60 274 A1 offenbart und in der hier beigefügten Fig. 1 dargestellt. Die darin beschriebene Bremse arbeitet nach dem sogenannten Ruhestromprinzip, d.h. die Bremse wird durch Energiespeicher wie beispielsweise Federn geschlossen und durch Fremdenergie wie beispielsweise Druckmittel wieder geöffnet. Bei der Bremse wirkt die axiale Kraft der Federn 4 auf einen inneren konischen Druck- oder Klemmring 10, der die Axialkraft über den Außenkonus der Spannzange 3 radial nach innen umlenkt.

Der im vorgenannten Stand der Technik vorgeschlagene Konuswinkel der Spannzange bzw. des Druckringes stellt dabei hinsichtlich erreichbarer Bremskraft bzw. erreichbarem Bremsdrehmoment und Ansprechgeschwindigkeit der Bremse einen guten Kompromiss dar und wird hier nicht näher erläutert.

Als Führungsstange 2 dient bei der Bremse eine zylindrische Stange, auf der über die metallische Spannzange die Bremskraft bzw. das Bremsdrehmoment erzeugt wird. Dabei steht die metallische Spannzange 3 direkt mit der Oberfläche der metallischen zylindrischen Stange in Kontakt. Als Betätigungsmedium ist bei der Bremse Druck-Öl oder Druck-Luft vorgesehen, wie es als Energieform in der Industrie vielfach zur Verfügung steht.

Die Kolbenfläche des Kolbens 6 für das Betätigungsmedium ist bei der Bremse als Kreisringfläche ausgeführt, deren Größe außen durch das zylindrische Bremsengehäuse 1 und innen durch die zylindrische Geometrie der Führungsstange 2 begrenzt wird. Mit dieser beschränkten Fläche des Kolbens und mit dem vorgegebenen Druck eines vorhandenen Druckmediums können somit nur stark eingeschränkte Kräfte erzeugt werden und es lassen sich damit nur die Kräfte relativ schwacher Federn 4 überwinden, was seinerseits die Bremskraft/das Bremsmoment begrenzt.

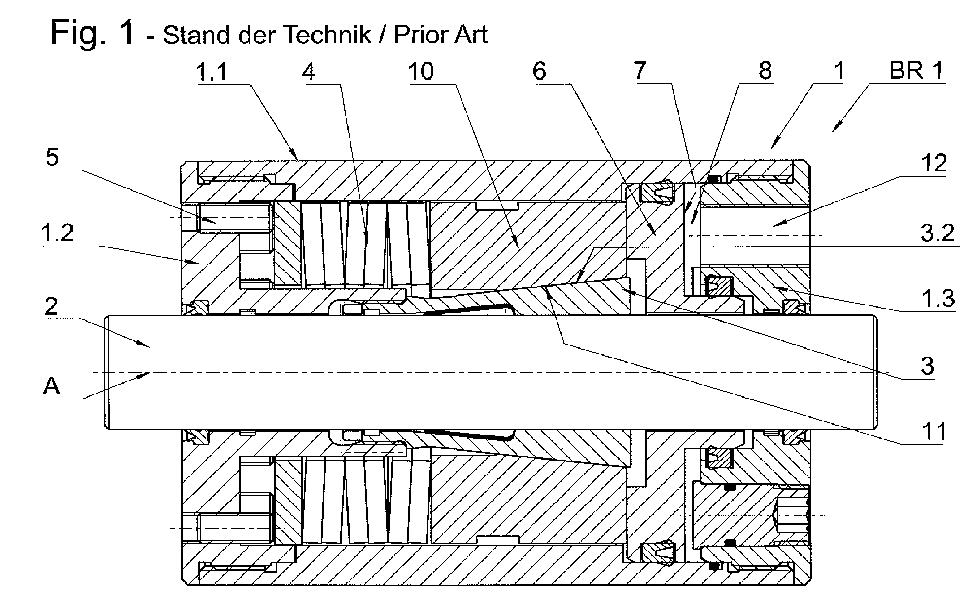

Bei der in Fig. 1 dargestellten druckmittelbetätigten Bremse BR 1 nach dem Stand der Technik handelt es sich um eine Bremse BR 1 in Ruhestrom-Ausführung, was bedeutet, dass die Klemmkraft zwischen Führungsstange 2 und Spannzange 3 im drucklosen Zustand durch einen Energiespeicher, hier als Federn 4 dargestellt, erzeugt und aufrecht erhalten wird. Die in einem aus Gehäuserohr 1.1, Einstellflansch 1.2 und Führungsflansch 1.3 bestehenden Bremsengehäuse 1 angeordneten Federn 4 werden über achsparallele Einstellschrauben 5 in Richtung der Mittelachse A vorgespannt und üben durch den mit einem Innenspannkonus 11 ausgestatteten Klemmring 10 auf die mit einem Spannzangenkonus 3.2 ausgestattete Spannzange 3 eine axiale Kraft aus, die radial zur Führungsstange 2 hin umgelenkt wird und durch die Reibung zwischen Spannzange 3 und Führungsstange 2 eine parallel zur Mittelachse A wirkende Bremskraft und/oder ein Bremsdrehmoment erzeugt, je nachdem ob sich die Führungsstange 2 dreht und/oder axial verschiebt.

Zum Öffnen der Bremse BR 1 wird der Kolbenraum 8 axial über die Druckzuführung 12 mit einem Druckmedium versorgt, das auf die kreisringförmige Kolbenfläche 7 des einen Kolbens 6 wirkt, der wiederum den Klemmring 10 gegen die Kraft der Federn 4 im Bremsengehäuse 1 verschiebt und dadurch die Klemmung zwischen Spannzange 3 und Führungsstange 2 aufhebt, wenn dies gewünscht wird.

Nachteilig an der beschriebenen Bremse BR 1 nach dem Stand der Technik ist zum einen die begrenzte Bremskraft bzw. das begrenzte Bremsdrehmoment durch den Reibkoeffizienten zwischen metallischer Oberfläche der Spannzange 3 und metallischer Oberfläche der Führungsstange 2 und durch die konstruktiv begrenzte Kolbenfläche 7 des Kolbens 6.

Zum anderen kann es durch die direkt miteinander in Kontakt stehenden metallischen Oberflächen von Spannzange 3 und Führungsstange 2 vor allem beim Bremsen aus höheren Geschwindigkeiten bzw. Drehzahlen zu Oberflächenschäden an Spannzange 3 und/oder Führungsstange 2 kommen.

Die druckmittelbetätigte Bremse nach dem Stand der Technik gemäß Fig. 1 weist demnach folgende Nachteile auf:
- Durch den metallischen Kontakt zwischen Spannzange 3 und der zylindrischen Führungsstange 2 sind der Reibkoeffizient und damit die erzielbare Bremskraft bzw. Bremsdrehmoment begrenzt und es besteht vor allem beim Bremsen aus hohen Geschwindigkeiten bzw. Drehzahlen die Gefahr, dass die Reibflächen an der zylindrischen Führungsstange bzw. an der Spannzange beschädigt werden.
- Durch die äußere Baugröße/den Durchmesser der Bremse und den Durchmesser der zylindrischen Führungsstange ist die Größe der kreisringförmigen Fläche des Kolbens 6 limitiert und es wird somit die durch einen vorgegebenen Druck erzielbare Kolbenkraft und damit die realisierbare Bremskraft bzw. das realisierbare Bremsdrehmoment eingeschränkt.

Aufgabe der Erfindung ist es demnach, eine deutliche Steigerung der erzielbaren Bremskraft bzw. des erzielbaren Bremsdrehmoments zu ermöglichen, ohne dass sich deswegen der Außendurchmesser der Bremse vergrößern muss und der Verschleiß an der Reibpaarung zwischen Spannzange und Führungsstange sich unzulässig erhöht.

Erfindungsgemäß wird die Aufgabe durch die kennzeichnenden Merkmale des Anspruchs 1 gelöst.

Weitere Merkmale der erfindungsgemäßen Linearbremse ergeben sich aus den Unteransprüchen.

Anhand der Figuren 2 - 5 sollen die Vorteile der erfindungsgemäßen druckmittelbetätigten Bremse näher erläutert werden. Es zeigen:
- Fig. 1: eine druckmittelbetätigte Bremse nach dem oben erörterten Stand der Technik mit einer limitierten kreisringförmigen Kolbenfläche und metallischem Kontakt zwischen Spannzange und zylindrischer Führungsstange;
- Fig. 2: eine erfindungsgemäße Bremse mit mehreren (z. B. 3) auf einer Achse hintereinander angeordneten Kolben, die so ausgestaltet und miteinander verbunden sind, dass sich deren durch das Druckmedium erzeugte Kräfte addieren. Die Spannzange ist im Kontaktbereich zur Führungsstange mit einem Reib-Werkstoff versehen;
- Fig. 3: einen vergrößerten Ausschnitt aus der Fig. 2 (Detail A), der die Anordnung und Ausgestaltung der hintereinander angeordneten Kolben zeigt;
- Fig. 4: einen vergrößerten Ausschnitt aus Fig. 2, der die Anordnung des Reib-Werkstoffes in der Spannzange verdeutlicht;
- Fig. 5: eine weitere Ausführungsform der vorliegenden Erfindung.

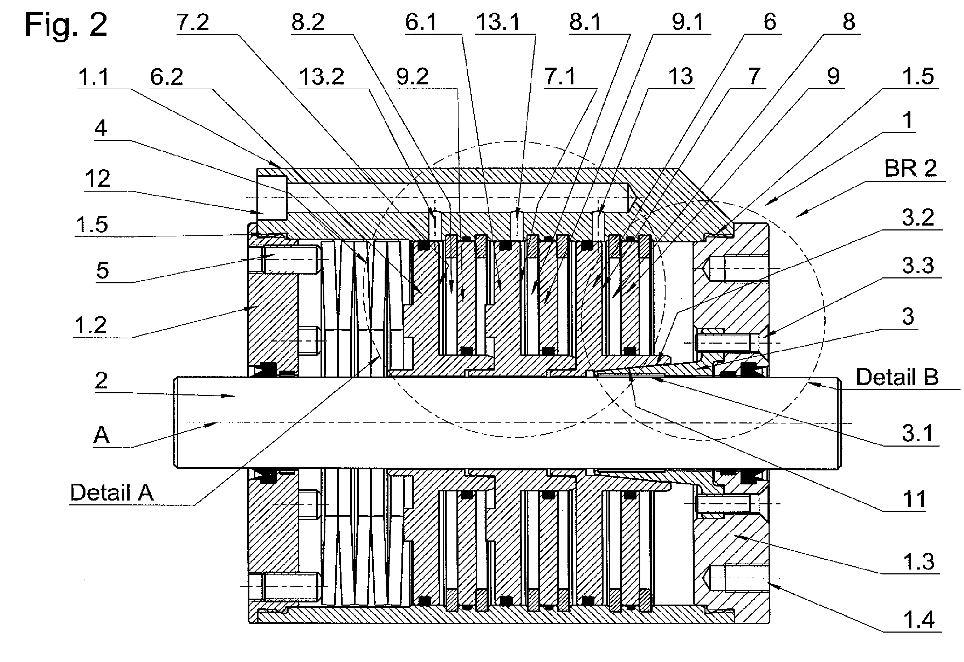

Die in den Fig. 2 - 4 gezeigte erfindungsgemäße Bremse BR 2 besteht aus einem 3-teilig aufgebauten Bremsengehäuse mit einem weitgehend zylindrischen Gehäuserohr 1.1, einem endständigen Einstellflansch 1.2 und einem am gegenüberliegenden Ende vorgesehenen Führungsflansch 1.3, wobei im Bremsengehäuse 1 weitere Funktionsteile angeordnet sind.

Im Gegensatz zum Stand der Technik ist die erfindungsgemäße Bremse BR 2 mit mehreren, z. B. 3 konzentrisch zur Mittelachse A hintereinander liegenden Kolbenanordnungen ausgerüstet, wobei jede der Kolbenanordnungen jeweils aus einem Kolben 6, 6.1, 6.2 mit einer Kolbenfläche 7, 7.1, 7.2, einem Kolbenraum 8, 8.1, 8.2 und einer mit dem Bremsengehäuse 1 fest verbundenen Zwischenplatte 9, 9.1, 9.2 besteht. Selbstverständlich sind auch mehr als 3 solcher hintereinander liegender Kolbenanordnungen möglich.

Das weitgehend zylindrische Gehäuserohr 1.1 ist in seinem in der Schnittansicht der Fig. 2 oberen Teil über die Länge der axialen Erstreckung verdickt ausgebildet, und zwar zur Aufnahme einer zur Mittelachse A der Linearbremse parallelen Druckzuführung 12 in Gestalt einer Bohrung, von der mehrere Abzweigungsbohrungen 13, 13.1, 13.2, ... (usw. bis n) radial einwärts ausgehen, die in einzelne, axial im Inneren des Bremsengehäuses hintereinander angeordnete Kolbenräume 8, 8.1, 8.2, ... (usw. bis n) münden, um diese bei Bedarf mit dem jeweils zur Verfügung stehenden Druckmittel der Druckzuführung 12 zu beaufschlagen.

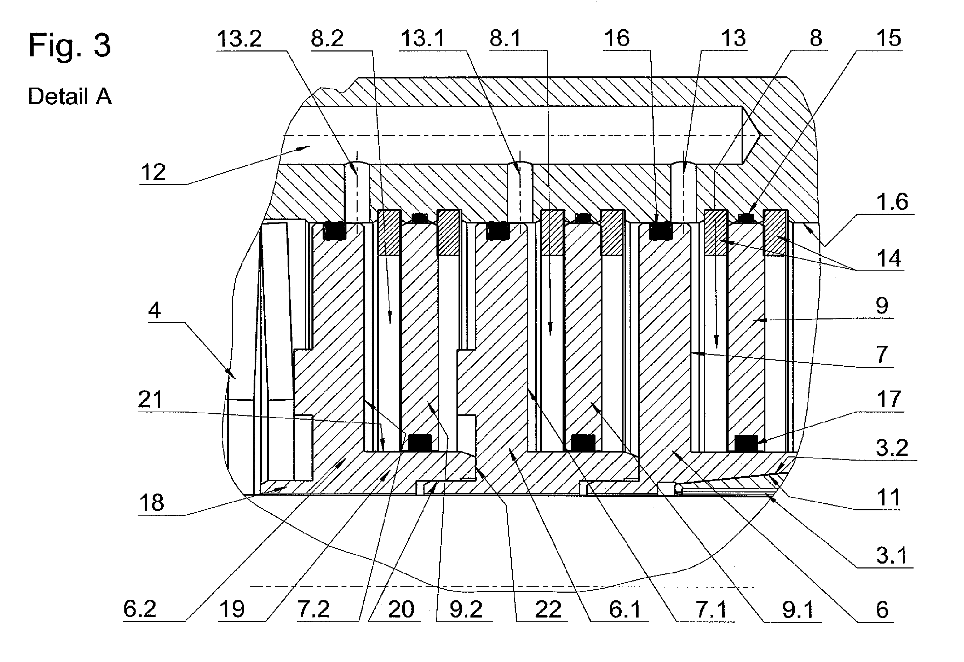

Die vorgenannten Kolbenräume werden axial auf der dem Führungsflansch 1.3 zugewandten Seite von einzelnen Zwischenplatten 9, 9.1, 9.2, ... (usw., bis n) begrenzt, die jeweils durch zwei in die zylindrische Innenfläche des Gehäuserohrs 1.1 eingreifende Sicherungsringe 14 (Fig. 3) axial fixiert sind. Auf der axial gegenüber liegenden Seite der vorgenannten Kolbenräume (den Federn 4 zugewandt) sind axial verschiebliche Ring-Kolben 6, 6.1, 6.2, ... (usw., bis n) vorgesehen, die auf der dem Führungsflansch 1.3 zugewandten Stirnfläche jeweils einen axial sich erstreckenden Dichtbund 19 (Fig. 3) aufweisen, der an seinem äußeren Ende einen kleinen radialen Abstand von der konzentrischen Außenfläche der Führungsstange 2 aufweist. An der entgegengesetzten anderen (den Federn 4 zugewandten) Stirnfläche eines jeden axial verschieblichen Ringkolbens 6, 6.1, 6.2, ... (usw., bis n) ist (radial an der Führungsstange 2 anliegend) ein axial vorstehender Zentrierbund 18 (Fig. 3) vorgesehen, der mit der Kolben-Zentrierung 20 des jeweils benachbarten (soweit vorhanden) Ring-Kolbens 6, 6.1, 6.2, ... (usw. bis n) verbunden ist.

Die am axial äußeren Ende eines jeden Dichtbundes 19 gelegene Kolben-Anlagefläche 22 eines jeden Kolbens greift am stirnseitigen Ende des benachbarten Kolbens an, und im Ergebnis ist jeder Kolben somit in der Lage, den auf seiner entgegengesetzten Kolbenfläche 7, 7.1, 7.2, ... (usw., bis n) vom Druckmittel aufgebauten Druck bzw. die daraus resultierende Druckkraft an den axial davor (in Fig. 3 links) angeordneten Ringkolben weiter zu geben: Durch die hintereinander aufgereihte Anordnung der einzelnen Kolben, Kolbenräume und Zwischenplatten gelingt es, trotz eines gegenüber dem Stand der Technik weitgehend unveränderten Gesamtdurchmessers der vom Druckmittel gelösten Bremse einen deutlich erhöhten Kraftangriff der Spannzange 3 bzw. des Spannzangenkonusses an der Führungsstange zu ermöglichen, ohne durch die Lösekraft der Kolbenanordnung beschränkt zu sein.

Bei ausbleibendem Druck des Druckmittels in der Druckzuführung 12 bzw. den damit verbundenen Kolbenräumen 8, 8.1, 8.2 (usw., bis n) erlangt die durch die achsparallelen Schrauben 5 einstellbare Vorspannkraft der Druckfedern 4 die Oberhand und verschiebt die gesamte Kolbenanordnung der Kolben 6, 6.1, 6.2, ... usw. in Fig. 2 nach rechts und sorgt dafür, dass der Spannzangenkonus 3.2 auf die in dem Führungsflansch 1.3 mit Hilfe der Schrauben 3.3 fixierte Spannzange 3 aufgleitet und somit den Klemmeingriff derselben an der Führungsstange 2 erzeugt.

Wenn andererseits ein ausreichend starker Druckmitteldruck in der Druckzuführung 12 und somit in allen Kolbenräumen 8, 8.1, 8.2, etc. vorherrscht, kompensiert die addierte Druckkraft der aneinander gereihten Kolben und Kolbenräume die Kraft der starken Druckfedern 4 und verschiebt somit den Spannzangenkonus 3.2 in Fig. 2 nach links, d. h. die Spannzange 3 wird gelöst und gibt die Führungsstange 2 zur Rotation und/oder zur Axialverschiebung frei.

Wenn also bei der Bremse BR 2 an der Druckzuführung 12 kein Druck anliegt, bewegen die Federn 4 die über die Kolben-Anlageflächen 22 miteinander in Kontakt stehenden Kolben 6, 6.1, 6.2 in Richtung zum Führungsflansch 1.3, wobei die Kraft der Federn 4 über den mit dem Spannzangenkonus 3.2 in Kontakt stehenden Innenspannkonus 11 radial auf die Spannzange 3 umlenkt wird und wodurch zwischen dem mit der Spannzange 3 an seiner Innen-Umfangsfläche fest verbundenen Reibwerkstoff 3.1 und der Führungsstange 2 die Bremskraft bzw. das Bremsdrehmoment erzeugt wird. Durch den zwischen der Führungsstange 2 und der Innenfläche der Spannzange 3 eingefügten Reibwerkstoff 3.1 kommt es zum einen auch bei hoher Bremskraft bzw. hohen Bremsdrehmomenten und bei Bremsungen aus hoher Geschwindigkeit bzw. hoher Drehzahl zu keiner Beschädigung der Reibflächen, und zum anderen kann durch den hohen Reibkoeffizienten zwischen Führungsstange 2 und Reibwerkstoff 3.1 bei sonst gleichen Verhältnissen eine höhere Bremskraft bzw. ein höheres Bremsdrehmoment erzeugt werden.

Zum Öffnen der Bremse BR 2 werden die Kolbenräume 8, 8.1, 8.2 zwischen den Kolben 6, 6.1, 6.2 und den Zwischenplatten 9, 9.1, 9.2 über die Druckzuführung 12 mit einem Druckmedium versorgt, das auf die kreisringförmigen Kolbenflächen 7, 7.1, 7.2 der Kolben 6, 6.1, 6.2 wirkt und die miteinander in Verbindung stehenden Kolben 6, 6.1, 6.2, gegen die Kraft der Federn 4 in Richtung zum Einstellflansch 1.2 verschiebt. Dabei addieren sich die Kräfte der Kolben 6, 6.1, 6.2 und sind damit in der Lage, im Vergleich zur Bremse BR 1 nach dem Stand der Technik deutlich höhere Kräfte der Federn 4 zu überwinden. Dies ermöglicht im Umkehrschluss bei annähernd gleichen Außenabmessungen und bei gleichen Betriebsdrücken des Druckmediums den Bau von Bremsen BR 2 mit deutlich gesteigerten Bremskräften bzw. Bremsdrehmomenten. Theoretisch ist es bei der erfindungsgemäßen Bremse BR 2 möglich, beliebig viele, d. h. 1.....n Kolbenanordnungen hintereinander vorzusehen.

Aus dem Detail A der Fig. 3 wird insbesondere die Lage und Wirkungsweise der verschiedenen Dichtflächen 15, 16 und 17 ersichtlich: Jede der Zwischenplatten 9, 9.1, 9.2, usw. weist radial außen eine Zwischenplattendichung 15 an der Innenfläche des Gehäuserohrs 1.1 sowie radial innen eine weitere Bund-Dichtung 17 auf, die gegen die äußere Kolben-Dichtfläche 21 eines jeden Dichtbundes 19 des jeweiligen Kolbens 6, 6.1, 6.2 usw. abschließt. Die Kolben wiederum weisen an ihrem radial äußeren Rand die Kolbendichtungen 16 auf, die an der Gehäusedichtfläche 1.6 des Gehäuserohrs 1.1 gleitend abdichten.

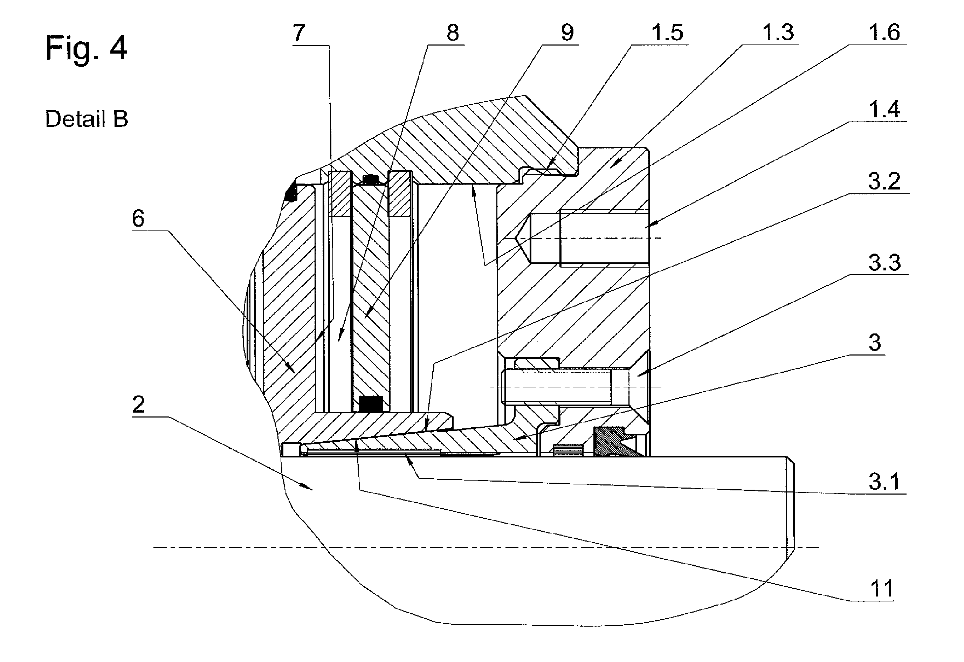

Im Detail B der Fig. 4 ist schließlich ein Aspekt der erfindungsgemäßen Bremse BR 2 dargestellt, bei dem die Positionierung des mit der Spannzange 3 fest verbundenen Reibwerkstoffes 3.1 verdeutlicht wird: Es handelt sich um eine hülsenförmige Beschichtung aus einem handelsüblichen, mit Kunstharz gebundenen Reibbelag geeigneter Dicke, der auf der zylindrischen Innenfläche der Spannzange 3 aufgeklebt ist. Alternativ kann der in der Spannzange angeordnete Reibwerkstoff aus einem Polymergemisch bestehen und kann durch ein Beschichtungsverfahren wie thermisches Spritzen aufgebracht werden. Beim Schließen der Bremse BR 2 gelangt der Reibwerkstoff 3.1 mit der Führungsstange 2 in Kontakt.

Die Umlenkung der durch die Federn 4 erzeugten Kraft auf die Spannzange 3 bzw. die Führungsstange 2 erfolgt durch die miteinander in Kontakt stehenden Flächen von Innenspannkonus 11 und Spannzangenkonus 3.2.

Die Spannzange 3 ist bei der dargestellten Bremse BR 2 über den Führungsflansch 1.3 fest mit dem Bremsengehäuse 1 verbunden und ermöglicht dadurch eine hohe Steifigkeit und eine spielfreie Kraft- bzw. Drehmomentübertragung.

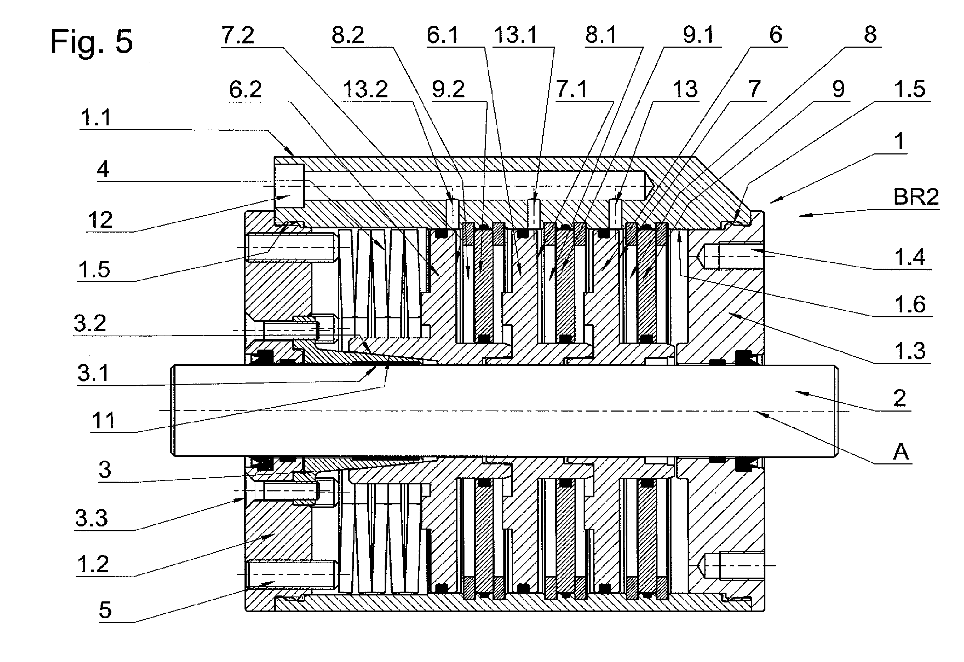

Fig. 5 zeigt eine ganz ähnlich aufgebaute und funktionierende Bremse mit weitgehend identischen Einzelteilen, allerdings mit dem Unterschied, dass die jeweiligen Kolben 6, 6.1, 6.2 usw. und die damit kooperierende Anordnung aus Spannzangenkonus 3.2 und Innenspannkonus 11 spiegelbildlich zur Ausführungsform der Fig. 2 angeordnet sind, wobei der Innenspannkonus 11 hierbei über die Schrauben 3.3 mit dem Einstellflansch verbunden ist, und zwar radial einwärts von den Federn 4. Dieser Aufbau der Fig. 5 hat zur Folge, dass bei ausbleibendem oder ausreichend niedrigem Druck des Druckmittels die Kraft der Federn überwiegt und somit die Bremse gelöst wird, weil der Spannzangenkonus 3.2 sich dabei vom festliegenden Innenspannkonus 11 axial nach rechts in Fig. 5 entfernt. Andererseits bewirkt ein ausreichend hoher Druck des Druckmittels eine Verschiebung des Spannzangenkonus 3.2 in Fig. 5 nach links, d. h. entgegen der Kraft der Federn 4, so dass die Bremse somit greift bzw. geschlossen wird.

In den Zeichnungen der zwei Ausführungsformen der Erfindung ist gezeigt, dass die kreisringförmigen Kolbenflächen aller Kolben (annähernd) gleich groß sind - siehe Anspruch 8. Allerdings ist es auch möglich, die kreisringförmigen Kolbenflächen aller Kolben mit voneinander abweichendem Innen- oder Außendurchmesser zu versehen, so dass die einzelnen Kolbenflächen unterschiedlich groß werden - siehe Anspruch 9. Diese Möglichkeit ist in den Zeichnungen nicht gezeigt, kann aber zu fertigungstechnischen Vorteilen führen, wenn die Abfolge der gestuften Durchmesser in geeigneter Weise gewählt wird, weil sich dadurch z. B. zum Teil Sicherungsringe und gehäuseseitig deren Einstiche sparen lassen, d. h. bei einer solchen Ausgestaltung kann sich ein verringerter Fertigungsaufwand ergeben.

Im Übrigen sei auf die nachfolgende kurze Beschreibung der Funktion von weiteren Details der Bremse anhand der jeweiligen Bezugszeichen verwiesen:
Anschraubgewinde 1.4: Damit soll die Kraft der Bremse über das Bremsengehäuse extern abgeleitet werden, beispielsweise auf Pneumatikzylinder, deren Kolbenstange durch die erfindungsgemäße Bremse geklemmt werden soll.
Gehäusegewinde 1.5: Herstellen der lösbaren Verbindung zwischen den Teilen 1.1 und 1.2 bzw. 1.1 und 1.3.
Gehäusedichtfläche 1.6: Auf dieser Fläche dichten die Kolbendichtungen 16 der axial beweglichen Kolben 6, 6.1, 6.2 ab.
Schraube 3.3: Damit wird die Spannzange 3 mit dem Führungsflansch 1.3 verbunden.
Sicherungsringe 14: Axiale Fixierung der Zwischenplatten 9, 9.1, 9.2 im Gehäuserohr 1.1.
Zwischenplattendichtung 15: Abdichtung zwischen Zwischenplatten 9, 9.1, 9.2 und Gehäuserohr 1.1.
Kolbendichtung 16: Abdichtung zwischen den axial beweglichen Kolben 6, 6.1, 6.2 und dem Gehäuserohr 1.1.
Bund-Dichtung 17: Abdichtung zwischen axial beweglichen Kolben 6, 6.1, 6.2 und den im Gehäuserohr 1.1 fixierten Zwischenplatten 9, 9.1, 9.2.
Zentrierbund 18: Dient im Zusammenspiel mit dem Dichtbund 19 der Zentrierung zwischen den einzelnen Kolben.
Dichtbund 19: Auf der Kolbendichtfläche des Dichtbundes laufen die Bund-Dichtungen und durch das Zusammenspiel zwischen Dichtbund und Zentrierbund werden die Kolben zueinander zentriert.
Kolbenzentrierung 20: In diesem Bereich werden die Kolben zueinander zentriert. Dazu wird an dieser Stelle eine zylindrische Passung (Spiel- oder Presspassung) verwendet oder ein Gewinde.
Kolbendichtfläche 21: Auf den Kolbendichtflächen laufen die Bund-Dichtungen der Zwischenplatten.
Kolbenkontaktfläche 22: Über die Kolbenkontaktflächen wird die Kraft der Federn 5 auf die Spannzange übertragen bzw. über die Kolbenkontaktflächen wirkt die Summe der durch Druckmittel erzeugten Kolbenkräfte zum Öffnen der Bremse gegen die Kraft der Federn.

**Bezugszeichenliste:**

| | | |
|---|---|---|
| 1 | Bremsengehäuse | |
| 1.1 | Gehäuserohr | |
| 1.2 | Einstellflansch | |
| 1.3 | Führungsflansch | |
| 1.4 | Anschraubgewinde | |
| 1.5 | Gehäusegewinde | |
| 1.6 | Gehäusedichtfläche | |
| 2 | Führungsstange | |
| 3 | Spannzange | |
| 3.1 | Reibwerkstoff | |
| 3.2 | Spannzangenkonus | |
| 3.3 | Schraube | |
| 4 | Feder | |
| 5 | Einstellschraube | |
| 6 | Kolben | |
| 6.1 | Kolben 1 | |
| 6.2 | Kolben 2 | |
| 6.n | Kolben n | |
| 7 | Kolbenfläche | |
| 7.1 | Kolbenfläche 1 | |
| 7.2 | Kolbenfläche 2 | |
| 7.n | Kolbenfläche n | |
| 8 | Kolbenraum | |
| 8.1 | Kolbenraum 1 | |
| 8.2 | Kolbenraum 2 | |
| 8.n | Kolbenraum n | |
| 9 | Zwischenplatte | |
| 9.1 | Zwischenplatte 1 | |
| 9.2 | Zwischenplatte 2 | |
| 9.n | Zwischenplatte n | |
| 10 | Klemmring | |
| 11 | Innenspannkonus | |
| 12 | Druckzuführung | |
| 13 | Abzweigbohrung | |
| 13.1 | Abzweigbohrung 1 | |
| 13.2 | Abzweigbohrung 2 | |
| 13.n | Abzweigbohrung n | |
| 14 | Sicherungsring | |
| 15 | Zwischenplattendichtung | |
| 16 | Kolbendichtung | |
| 17 | Bund-Dichtung | |
| 18 | Zentrierbund | |
| 19 | Dichtbund | |
| 20 | Kolben-Zentrierung | |
| 21 | Kolben-Dichtfläche | |
| 22 | Kolben-Anlagefläche | |
| A | Mittelachse | der Linearbremse |
| BR 1 | Bremse 1 | Stand der Technik |
| BR 2 | Bremse 2 | Erfindungsgegenstand |

## Patentansprüche

1. Bremse (BR 2) für eine axial und/oder drehbewegte Führungsstange (2), bestehend aus einem die Führungsstange (2) umgebenden Bremsengehäuse (1), einer darin zentrisch angeordneten und mit dem Bremsengehäuse (1) fest verbundenen Spannzange (3), die die Führungsstange (2) konzentrisch umgreift und beim Bremsen radial auf die Führungsstange (2) drückt, und einem Innenspannkonus (11), der durch druckmittelbetätigte axial verschiebliche Ringkolben (6, 6.1, 6.2, 6.n) im Gehäuse (1) axial bewegt wird und dessen Axialbewegung durch das Zusammenwirken von Innenspannkonus (11) und Spannzangenkonus (3.2) radial zur Führungsstange (2) umgelenkt wird, wobei die Kolbengröße außen durch das zylindrische Bremsengehäuse (1) und innen durch die zylindrische Geometrie der Führungsstange (2) begrenzt wird,
**dadurch gekennzeichnet, dass**
in der Bremse (BR 2) mehrere parallel zur Mittelachse (A) bewegliche axial verschiebliche Ringkolben (6, 6.1, 6.2, 6.n) hintereinander angeordnet sind, die so in einer Wirkverbindung zueinander stehen, dass sich die durch das Druckmittel auf die einzelnen Kolben (6, 6.1, 6.2, 6.n) wirkenden Kräfte addieren,
und dass die Spannzange (3) an deren Innendurchmesser im Bereich der Reibpaarung mit einem Reibwerkstoff (3.1) versehen ist, zwischen dem und der Bremsstange (2) die Bremskraft bzw. das Bremsdrehmoment durch Reibschluss erzeugt wird.

2. Bremse (BR 2) nach den Anspruch 1,
**dadurch gekennzeichnet, dass**
die Bremse (BR) durch Energiespeicher, vorzugsweise Federn (4) geschlossen und durch Druckbeaufschlagung der Kolben (6, 6.1, 6.2, 6.n) geöffnet wird (Fig. 2).

3. Bremse (BR 2) nach den Anspruch 1,
**dadurch gekennzeichnet, dass**
die Bremse bei Druckbeaufschlagung der Kolben (6, 6.1, 6.2, 6.n) geschlossen und durch Energiespeicher, vorzugsweise Federn (4) geöffnet wird (Fig. 5).

4. Bremse (BR 2) nach mindestens einem der Ansprüche 1 bis 3,
**dadurch gekennzeichnet, dass**
die Führungsstange (2) eine zylindrische Außenkontur aufweist.

5. Bremse (BR 2) nach mindestens einem der Ansprüche 1 bis 4,
**dadurch gekennzeichnet, dass**
die Mittelachsen (A) der Kolben (6, 6.1, 6.2, 6.n) auf der Mittelachse (A) der Bremse (BR 2) liegen.

6. Bremse (BR 2) nach mindestens einem der Ansprüche 1 bis 5,
**dadurch gekennzeichnet, dass**
das Bremsengehäuse (1) sowie die Kolben (6, 6.1, 6.2, 6.n) annähernd rotationssymmetrisch ausgeführt sind und die Kolbenflächen (7, 7.1, 7.2, 7.n) eine Kreisringform aufweisen.

7. Bremse (BR 2) nach mindestens einem der Ansprüche 1 bis 6,
**dadurch gekennzeichnet, dass**
die kreisringförmigen Kolbenflächen (7, 7.1, 7.2, 7.n) aller Kolben (6, 6.1, 6.2, 6.n) annähernd gleich groß sind.

8. Bremse (BR 2) nach mindestens einem der Ansprüche 1 bis 6,
**dadurch gekennzeichnet, dass**
die kreisringförmigen Kolbenflächen (7, 7.1, 7.2, 7.n) aller Kolben (6, 6.1, 6.2, 6.n) bedingt durch voneinander abweichende Außendurchmesser oder Innendurchmesser unterschiedlich sind.

9. Bremse (BR 2) nach mindestens einem der Ansprüche 1 bis 8,
**dadurch gekennzeichnet, dass**
der in der Spannzange (3) befindliche Reibwerkstoff (3.1) aus einem handelsüblichen mit Kunstharz gebundenen Reibbelag besteht und mit der Spannzange (3) verklebt ist.

10. Bremse (BR 2) nach mindestens einem der Ansprüche 1 bis 8,
**dadurch gekennzeichnet, dass**
der in der Spannzange (3) befindliche Reibwerkstoff (3.1) aus einem Polymergemisch besteht und durch ein Beschichtungsverfahren wie thermisches Spritzen aufgebracht wird.

11. Bremse (BR 2) nach mindestens einem der Ansprüche 1 bis 10,
**dadurch gekennzeichnet, dass**
die Kolbenräume (8, 8.1, 8.2, 8.n) einerseits durch die Kolbenflächen (7, 7.1, 7.2, 7.n) der Kolben (6, 6.1, 6.2, 6.n) und andererseits durch die mit dem Gehäuse fest verbundenen Zwischenscheiben (9, 9.1, 9.2, 9.n) begrenzt sind.

12. Bremse (BR 2) nach mindestens einem der Ansprüche 1 bis 11,
**dadurch gekennzeichnet, dass**
die Kolben (6, 6.1, 6.2, 6.n) miteinander durch konzentrische Gewinde verbunden sind.

13. Bremse (BR 2) nach mindestens einem der Ansprüche 1 bis 11,
**dadurch gekennzeichnet, dass**
die Kolben (6, 6.1, 6.2, 6.n) miteinander durch zylindrische Presspassungen oder Spielpassungen verbunden bzw. zentriert sind.

14. Bremse (BR 2) nach mindestens einem der Ansprüche 1 bis 13,
**dadurch gekennzeichnet, dass**
das Bremsengehäuse (1) Schnittstellen in Form von auf einem Teilkreis des Bremsengehäuses (1) befindlichen Anschraubgewinden (1.4) zum Anbau der Bremse (BR 2) an handelsübliche Druckmittelzylinder aufweist.

15. Bremse (BR 2) nach Anspruch 14,
**dadurch gekennzeichnet, dass**
die Schnittstellen in Form von auf einem Teilkreis des Bremsengehäuses (1) befindlichen Anschraubgewinden (1.4) den Schnittstellen der zur Bremse (BR) passenden handelsüblichen Druckmittelzylinder entspricht.

## Claims

1. Brake (BR2) for an axially and/or rotationally moved guide rod (2), comprising a brake housing (1) surrounding the guide rod (2), a clamping jaw (3) centrally disposed in said brake housing and fixedly connected therewith, said clamping jaw concentrically engaging around the guide rod (2) and exerting radial pressure thereonto when the brake is actuated, and an inner clamping cone (11) axially moved in housing (1) by fluid-actuated and axially movable annular pistons (6, 6.1, 6.2, 6.n), with the axial movement of said cone in a direction radial to guide rod (11) being deflected by inner clamping cone (11) cooperating with clamping jaw cone (3.2), with the piston being limited in size externally by cylindrical brake housing (1) and internally by the cylindrical geometry of guide rod (2),
**characterized by**
brake (BR2) having therein a plurality of movable and axially slidable annular pistons (6, 6.1, 6.2, 6.n) disposed one behind the other and in parallel with central axis (A), said annular pistons operatively connected so that the forces add which the pressure fluid causes to act on the individual pistons (6, 6.1, 6.2, 6.n), and by
clamping jaw (3) being provided on the inner diameter thereof in the region of the friction couples with a friction material (3.1), with the braking force or the braking torque generated by said friction material being frictionally locked to brake rod (2).

2. Brake (BR2) as claimed in claim 1, **characterized by** brake (BR2) being engaged by energy storage means, preferably by a spring (4), and being disengaged by pressurizing pistons (6, 6.1, 6.2, 6.n) (Fig. 2).

3. Brake (BR2) as claimed in claim 1, **characterized by** said brake being engaged by pressurizing pistons (6, 6.1, 6.2, 6.n) and being disengaged by energy storage means, preferably springs (4) (Fig. 5).

4. Brake (BR2) as claimed in at least one of claims 1 to 3, **characterized by** guide rod (2) having a cylindrical external contour.

5. Brake (BR2) as claimed in at least one of claims 1 to 4, **characterized by** the central axis (A) of pistons 6, 6.1, 6.2, 6.n) coinciding with the central axis (A) of brake (BR2).

6. Brake (BR2) as claimed in at least one of claims 1 to 5, **characterized by** brake housing (1) and pistons (6, 6.1, 6.2, 6.n) being configured to be substantially rotationally symmetrical and by piston surfaces (7, 7.1, 7.2, 7.n) being circularly annular in shape.

7. Brake (BR2) as claimed in at least one of claims 1 to 6, **characterized by** said circularly annular piston surfaces (7, 7.1, 7.2, 7.n) of all pistons (6, 6.1, 6.2, 6.n) being substantially equal in surface area.

8. Brake (BR2) as claimed in at least one of claims 1 to 6, **characterized by** circularly annular piston surfaces (7, 7.1, 7.2, 7.n) of all pistons (6, 6.1, 6., 6.n) differing by comprising differing outer diameters or inner diameters.

9. Brake (BR2) as claimed in at least one of claims 1 to 8, **characterized by** the friction material (3.1) in clamping jaw (3) consisting of a commercially available friction liner bound by a synthetic resin and adhesively bonded to clamping jaw (3).

10. Brake (BR2) as claimed in at least one of claims 1 to 8, **characterized by** the friction material (3.1) in clamping jaw (3) comprising a polymer blend and being applied by a coating process such as thermal spraying.

11. Brake (BR2) as claimed in at least one of claims 1 to 10, **characterized by** piston spaces (8, 8.1, 8.2, 8.n) being delimited by the piston surfaces (7, 7.1, 7.2, 7.n) of pistons (6, 6.1, 6.2, 6.n), on the one hand, and by intervening discs (9, 9.1, 9.2, 9.n) fixedly connected with said housing, on the other.

12. Brake (BR2) as claimed in at least one of claims 1 to 11, **characterized by** the pistons (6, 6.1, 6.2, 6.n) being interconnected by concentric threads.

13. Brake (BR2) as claimed in at least one of claims 1 to 11, **characterized by** the pistons (6, 6.1, 6.2, 6.n) being connected with each other and centered by cylindrical interference fits or clearance fits.

14. Brake (BR2) as claimed in at least one of claims 1 to 13, **characterized by** the brake housing (1) comprising interfaces in the form of of attachment threads (1.4) located along a pitch circle of brake housing (1) for attaching brake (BR2) to commercially available pressure fluid cylinders.

15. Brake (BR2) as claimed in claim 14, **characterized by** the interfaces in the form of attachment threads (1.4) located on a pitch circle of brake housing (1) corresponding to the interfaces of the pressure fluid cylinders commercially available and matching brake (BR2).

## Revendications

1. Frein (BR 2) pour une tige de guidage (2) déplacée de manière axiale et/ou en rotation, constitué d'un boîtier de frein (1) entourant la tige de guidage (2), d'une pince de serrage (3) disposée dedans de manière centrée et reliée de manière solidaire au boîtier de frein (1), laquelle entoure de manière concentrique la tige de guidage (2) et exerce une pression radiale lors du freinage sur la tige de guidage (2), et d'un cône de serrage intérieur (11), qui est déplacé de manière axiale dans le boîtier (1) par des pistons annulaires (6, 6.1, 6.2, 6.n) pouvant être déplacés par un coulissement axial, actionnés par un fluide sous pression et dont le déplacement axial est dévié de manière radiale par rapport à la tige de guidage (2) du fait de la coopération entre le cône de serrage intérieur (11) et le cône de pince de serrage (3.2), la dimension du piston étant limitée à l'extérieur par le boîtier de frein (1) cylindrique et à l'intérieur par la forme géométrique cylindrique de la tige de guidage (2),
**caractérisé en ce que**
plusieurs pistons annulaires (6, 6.1, 6.2, 6.n) mobiles de manière parallèle par rapport à l'axe médian (A), pouvant être déplacés par un coulissement axial sont disposés les uns derrière les autres dans le frein (BR 2), lesquels se trouvent les uns par rapport aux autres dans une liaison active telle que les forces agissant du fait du fluide sous pression sur les divers pistons (6, 6.1, 6.2, 6.n) s'ajoutent,
et **en ce que** la pince de serrage (3) est pourvue, au niveau de son diamètre intérieur dans la zone de l'appariement par friction, d'un matériau de friction (3.1), entre lequel et la tige de freinage (2) la force de freinage ou le couple de freinage est produite/produit par friction.

2. Frein (BR 2) selon la revendication 1,
**caractérisé en ce que**
le frein (BR) est fermé par un accumulateur d'énergie, de préférence par des ressorts (4) et est ouvert lorsque les pistons (6, 6.1, 6.2, 6.n) sont soumis à l'action d'une pression (figure 2).

3. Frein (BR 2) selon la revendication 1,
**caractérisé en ce que**
le frein est fermé lorsque les pistons (6, 6.1, 6.2, 6.n) sont soumis à l'action d'une pression et est ouvert par l'accumulateur d'énergie, en particulier par des ressorts (4) (figure 5).

4. Frein (BR 2) selon au moins l'une quelconque des revendications 1 à 3,
**caractérisé en ce que**
la tige de guidage (2) présente un contour extérieur cylindrique.

5. Frein (BR 2) selon au moins l'une quelconque des revendications 1 à 4,
**caractérisé en ce que**
les axes médians (A) des pistons (6, 6.1, 6.2, 6.n) se trouvent sur l'axe médian (A) du frein (BR 2).

6. Frein (BR 2) selon au moins l'une quelconque des revendications 1 à 5,
**caractérisé en ce que**
le boîtier de frein (1) ainsi que les pistons (6, 6.1, 6.2, 6.n) sont réalisés approximativement de manière symétrique en rotation, et les faces de piston (7, 7.1, 7.2, 7.n) présentent une forme d'anneau circulaire.

7. Frein (BR 2) selon au moins l'une quelconque des revendications 1 à 6,
**caractérisé en ce que**
les faces de piston (7, 7.1, 7.2, 7.n) en forme d'anneau circulaire de tous les pistons (6, 6.1, 6.2, 6.n) présentent approximativement la même dimension.

8. Frein (BR 2) selon au moins l'une quelconque des revendications 1 à 6,
**caractérisé en ce que**
les faces de piston (7, 7.1, 7.2, 7.n) en forme d'anneau circulaire de tous les pistons (6, 6.1, 6.2, 6.n) sont différentes du fait de diamètres extérieurs ou de diamètres intérieurs divergeant les uns des autres.

9. Frein (BR 2) selon au moins l'une quelconque des revendications 1 à 8,
**caractérisé en ce que**
le matériau de friction (3.1) se trouvant dans la pince de serrage (3) est constitué d'une garniture de friction disponible dans le commerce liée avec une résine synthétique et est collé à la pince de serrage (3).

10. Frein (BR 2) selon au moins l'une quelconque des revendications 1 à 8,
**caractérisé en ce que**
le matériau de friction (3.1) se trouvant dans la pince de serrage (3) est constitué d'un mélange polymère et est appliqué par un procédé de revêtement tel qu'une pulvérisation thermique.

11. Frein (BR 2) selon au moins l'une quelconque des revendications 1 à 10,
**caractérisé en ce que**
les espaces de piston (8, 8.1, 8.2, 8.n) sont délimités d'une part par les faces de piston (7, 7.1, 7.2, 7.n) des pistons (6, 6.1, 6.2, 6.n) et d'autre part par les disques intermédiaires (9, 9.1, 9.2, 9.n) reliés de manière solidaire au boîtier.

12. Frein (BR 2) selon au moins l'une quelconque des revendications 1 à 11,
**caractérisé en ce que**
les pistons (6, 6.1, 6.2, 6.n) sont reliés les uns aux autres par des filetages concentriques.

13. Frein (BR 2) selon au moins l'une quelconque des revendications 1 à 11,
**caractérisé en ce que**
les pistons (6, 6.1, 6.2, 6.n) sont reliés ou centrés les uns avec les autres par des systèmes cylindriques d'ajustement avec pressage ou d'ajustement avec jeu.

14. Frein (BR 2) selon au moins l'une quelconque des revendications 1 à 13,
**caractérisé en ce que**
le boîtier de frein (1) présente des interfaces sous la forme de filetages de vissage (1.4) se trouvant sur un cercle partiel du boîtier de frein (1) servant au montage du frein (BR 2) au niveau de vérins à fluide sous pression disponibles dans le commerce.

15. Frein (BR 2) selon la revendication 14,
**caractérisé en ce que**
les interfaces se présentant sous la forme de filetages de vissage (1.4) se trouvant sur un cercle partiel du boîtier de frein (1) correspondent aux interfaces des vérins à fluide sous pression disponibles dans le commerce s'ajustant au frein (BR).
